Europäisches Patentamt

European Patent Office

Office européen des brevets

(11) Veröffentlichungsnummer : **0 082 882**
**B1**

(12) **EUROPÄISCHE PATENTSCHRIFT**

(45) Veröffentlichungstag der Patentschrift :
13.03.85

(51) Int. Cl.⁴ : **A 01 F   7/06, A 01 F 12/10**

(21) Anmeldenummer : **81110765.5**

(22) Anmeldetag : **24.12.81**

(54) Vorrichtung zur Beschickung einer mindestens ein Einzugsorgan aufweisenden Dresch- und Trenntrommel eines Axialflussmähdreschers.

(43) Veröffentlichungstag der Anmeldung :
06.07.83 Patentblatt 83/27

(45) Bekanntmachung des Hinweises auf die Patenterteilung : 13.03.85 Patentblatt 85/11

(84) Benannte Vertragsstaaten :
BE DE FR GB IT SE

(56) Entgegenhaltungen :
DE-A- 2 143 532
DE-A- 2 943 839
FR-A- 2 154 155

(73) Patentinhaber : **DEERE & COMPANY**
**1 John Deere Road**
**Moline Illinois 61265 (US)**

(72) Erfinder : **Gorsler, Karl Günther**
**Thüringer Strasse 6**
**D-6660 Zweibrücken (DE)**

(74) Vertreter : **Sartorius, Peter et al**
**DEERE & COMPANY European Office, Patent Department Postfach 503 Steubenstrasse 36-42**
**D-6800 Mannheim 1 (DE)**

## Beschreibung

Die Erfindung bezieht sich auf eine Vorrichtung zur Beschickung einer mindestens ein Einzugsorgan aufweisenden Dresch- und Trenntrommel eines Axialflußmähdreschers mit einem in einem Fördergehäuse angeordneten und antreibbaren Förderorgan und einem diesem nachgeschalteten, drehbaren Förderorgan, das unterhalb und im Bereich des vorderen Endes der Dresch- und Trenntrommel vorgesehen ist und die Einzugsorgane von unter her mit Erntegut beschickt.

Es ist bereits eine Vorrichtung zur Beschickung einer Dresch- und Trenntrommel für einen Axialflußmähdrescher bekannt (FR-A-2 154 155), die in einem Schrägfördergehäuse einen Elevatorförderer zeigt, der das Erntegut über den Boden des Schrägfördergehäuses einem nachgeschalteten, gleichläufig antreibbaren Walzenförderer zuführt, über den das Erntegut über eine geneigt verlaufende Rampe den vorderen Einzugsorganen der Dresch- und Trenntrommel zugeführt wird. Da der Walzenförderer die gleiche Förderrichtung wie das im Schrägfördergehäuse angeordnete Förderorgan aufweist, wird das Erntegut unterschlächtig über die Rampe den Einzugsorganen zugeführt, so daß es im Einzugsbereich der Einzugsorgane zu Verstopfungen kommen kann, zumal der Abstand zwischen dem Abgabeende des Walzenförderers und den Einzugsorganen relativ groß ist. Außerdem ist der Walzenförderer mit Bezug auf die Einzugsorgane der Dresch- und Trenntrommel so angeordnet, daß das Erntegut je nach Stellung der Einzugsorgane gegen die Förderblätter der Einzugsorgane trifft und dadurch kurzfristig zurückprallt, so daß die Förderkapazität herabgesetzt wird.

Der Erfindung liegt die Aufgabe zugrunde, das zwischen den Einzugsorganen der Dresch- und Trenntrommel und den im Fördergehäuse angeordneten Förderorganen vorgesehene Förderorgan derart anzuordnen und anzutreiben, daß Verstopfungen im Einzugsbereich der Dresch- und Trenntrommel vermieden werden können. Diese Aufgabe ist dadurch gelöst worden, daß das nachgeschaltete Förderorgan, das aus dem Fördergehäuse abgegebene Erntegut oberschlächtig dem Einzugsorgan der Dresch- und Trenntrommel zuführt. Durch den vorteilhaften Antrieb des nachgeschalteten Förderorgans werden die Einzugsorgane der Dresch- und Trenntrommel optimal beschickt, da das Erntegut besser von unten her an die Einzugsorgane herangeführt werden kann, insbesondere dann, wenn die Einzugsorgane als Schneckenwendeln ausgebildet sind. Durch die vorteilhafte Anordnung des nachgeschalteten Förderorgans gelangt das Erntegut besser in die Zwischenräume der einzelnen Schneckenwendeln. Durch diese Anordnung kann also der Durchsatz des Erntegutes verbessert werden, auch dann, wenn das Erntegut relativ feucht ist. Das im Fördergehäuse bewegte Erntegut wird normalerweise über den Boden des Fördergehäuses geleitet, d. h. unterschlächtig dem nachfolgenden Förderer zugeführt, der das Erntegut oberschlächtig an die Einzugsorgane der Dresch- und Trenntrommel abgibt. Bei dieser Anordnung ist es jedoch auch möglich, das Erntegut über das im Fördergehäuse angeordnete Förderorgan nicht unterschlächtig sondern oberschlächtig dem nachgeschalteten Förderorgan aufzugeben, das es dann weiter oberschlächtig den Einzugsorganen der Dresch- und Trenntrommel zuführt. Auch bei dieser Anordnung ist eine optimale Beschickung der Dresch- und Trenntrommel gewährleistet.

Um eine einwandfreie und verstopfungsfreie Beschickung der Einzugsorgane der Dresch- und Trenntrommel zu gewährleisten, ist es gemäß der Erfindung ferner vorteilhaft, daß das nachgeschaltete Förderorgan in etwa unterhalb der Projektionsfläche des Einzugsorganes liegt und gegenläufig zu dem im Fördergehäuse angeordneten Förderorgan antreibbar ist.

Gemäß der Erfindung ist es ferner vorteilhaft, daß das nachgeschaltete Förderorgan mit dem Abgabeende des im Fördergehäuse angeordneten Förderorganes eine Durchlaßöffnung bildet, durch die das von dem im Fördergehäuse angeordneten Förderorgan unterschlächtig geförderte Erntegut geleitet wird. Vorteilhaft ist es ferner, daß das nachgeschaltete Förderorgan in einer dem Förderorgan angepaßten Mulde unter dem Einzugsorgan der Dresch- und Trenntrommel angeordnet ist. Durch die Förderung des Erntegutes durch den Spalt zwischen den beiden sich gegenüberliegenden Förderorganen wird eine optimale Beschickung der Einzugsorgane gewährleistet, da das Erntegut durch beide Förderorgane beschleunigt den Einzugsorganen zugeführt werden kann, so daß Verstopfungen zwischen der Abgabeseite des nachgeschalteten Förderorgans und den Einzugsorganen vermieden werden können. Durch die optimale Zuordnung der beiden Förderorgane wird somit eine einwandfreie Zwangsförderung des Erntegutes auf einfache Weise gewährleistet.

Nach einem weiteren Merkmal der Erfindung ist es vorteilhaft, daß die geometrische Verlängerung der durch die Stirnfläche des Einzugsorganes verlaufenden vertikalen Ebene sich vor der äußeren Begrenzung der Aufnahmeseite des nachgeschalteten Förderorgans vorbeierstreckt. Vorteilhaft ist es ferner, daß das nachgeschaltete Förderorgan mit einer größeren Geschwindigkeit angetrieben wird, als das im Fördergehäuse angeordnete Förderorgan. Außerdem ist es vorteilhaft, daß die Drehrichtung des nachgeschalteten Förderorganes der Förderrichtung des vom im Fördergehäuse angeordneten Förderorgan abgegebenen Erntegutes entgegengesetzt ist und daß die Achsabstände zwischen den beiden Förderorganen veränderbar sind. Das nachgeschaltete Förderorgan, das normalerweise unterhalb der Projektionsfläche der Einzugsorgane der Dresch- und Trenntrommel liegt, kann auch so angeordnet sein, daß die Aufnahmeseite des Förderorgans etwas vor dem vorderen Ende der Einzugsorgane der Dresch- und Trenntrommel endet. Um eine Anpassung der Förderorgane an das zu fördernde Erntegut vorzunehmen, kann entweder das Abgabeende des im Schrägfördergehäuse angeordneten Förderorgans oder das nachgeschaltete Förderorgan in seiner horizontalen Lage verstellt werden, so daß die Spaltbreite zwischen den beiden Förderorganen verändert werden kann. Durch die höhere Geschwindigkeit des nachgeschalteten Förderorganes wird das Erntegut im Spalt zwischen den beiden Förderorganen auseinandergezogen und mit erhöhter Geschwindigkeit den Einzugsorganen zugeführt. Außerdem ist es vorteilhaft, daß die geometrische Verlängerung der durch die Stirnfläche des Einzugsorganes verlaufenden Ebene den nachgeschalteten Förderer zwischen seiner vorderen Begrenzung und seiner Mittelachse schneidet.

In der Zeichnung ist ein Ausführungsbeispiel einer Förderwalze zur Beschickung eines Einzugsorganes einer Dresch- und Trenntrommel nach der Erfindung schematisch dargestellt.

Es zeigt :

Figur 1 eine schematische Darstellung eines Axialflußmähdreschers mit einer Erntebergungsvorrichtung in Seitenansicht ;

Figur 2 eine Schnittdarstellung des Einzugsorganes einer Dresch- und Trenntrommel sowie die zugehörigen Förderorgane zur Beschickung der Einzugsorgane.

In der Zeichnung ist mit 10 ein Gehäuse eines Axialflußmähdreschers bezeichnet, der mit vorderen Laufrädern 12 und hinteren steuerbaren Laufrädern 14 ausgerüstet ist. Der Mähdrescher 10 weist ferner eine Fahrerkabine 16 sowie hinter der Fahrerkabine einen Satteltank 18 auf, der eine Dresch- und Trenntrommel 22 umgibt. Hinter dem Abgabeende der Dresch- und Trenntrommel 22 befindet sich im Gehäuse 10 ein Verbrennungsmotor 20, der zum Antrieb des Axialflußmähdreschers sowie der im Axialflußmähdrescher vorgesehenen Arbeitsorgane dient. Der Satteltank 18 läßt sich über ein Entleerungsrohr 24 leeren, das hierzu an das Auslaufende des Satteltanks 18 angeschlossen ist und das von der in der Zeichnung dargestellten Transportstellung in eine Entleerungsstellung verschwenkbar ist.

Am vorderen Ende des Gehäuses 10 befindet sich eine Erntebergungsvorrichtung 26, die aus einem Schneidwerkstisch 28 und einem Fördergehäuse, das als Schrägfördergehäuse 30 ausgebildet ist, besteht. Am Schneidwerkstisch 28 ist eine einstellbare Haspel 32 angeordnet, mittels der das von einem im Schneidwerkstisch angeordneten Schneidwerk 34 abgeschnittene Erntegut einer Einzugswalze 36 zugeführt wird, über die das Erntegut zusammengezogen wird und einem im Schrägfördergehäuse 30 angeordneten Elevatorförderer 38 aufgegeben wird. Anstelle des im Schrägfördergehäuse 30 angeordneten Elevatorförderers können auch zwei sich in Längsrichtung erstreckende Förderschnecken oder zahlreiche parallel zueinander verlaufende Förderwalzen angeordnet werden, die das Erntegut durch das Schrägfördergehäuse 30 bewegen. Das Schrägfördergehäuse 30 ist an die Stirnseite des Gehäuses 10 vertikal schwenkbar angeschlossen.

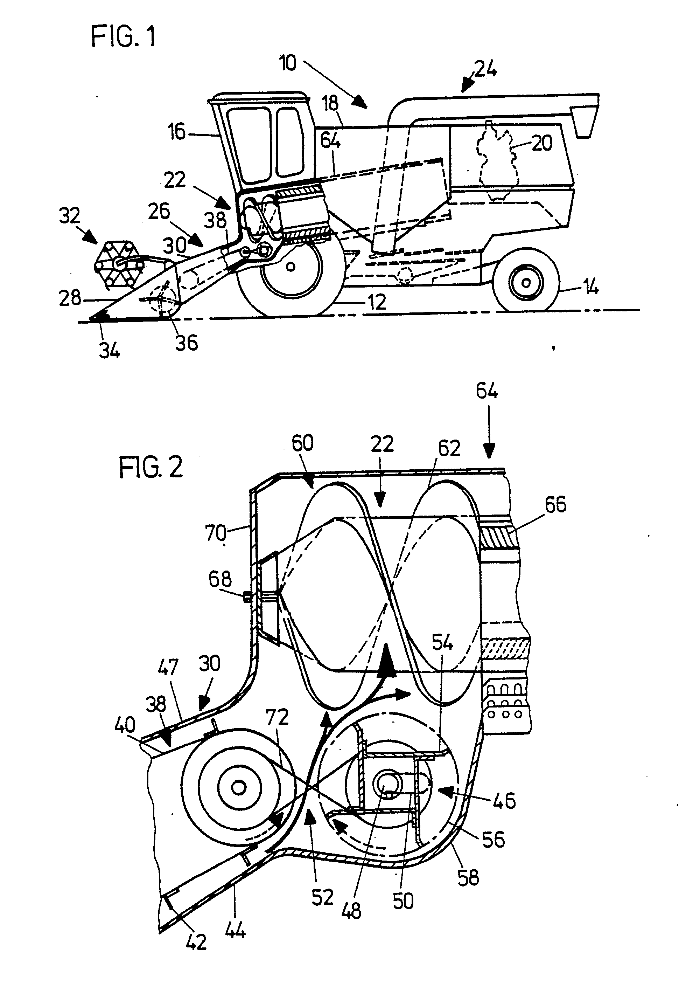

Wie aus Fig. 2 hervorgeht, weist der Elevatorförderer 38 eine Förderkette 40 auf, an der zahlreiche Förderleisten 42 angeordnet sind. Der untere Trum der Förderkette 40 kann mit Bezug auf einen unteren Boden 44 des Schrägfördergehäuses 30 einen größeren Abstand aufweisen, als der obere Trum mit Bezug auf eine obere Wand 47 des Schrägfördergehäuses, damit das Erntegut störungsfrei über den Boden 44 geleitet werden kann, bis es in den Aufnahmebereich eines dem Elevatorförderer 38 nachgeschalteten Förderorganes gelangt, das gemäß Fig. 2 als Förderwalze 46 ausgebildet ist. Die Förderwalze 46 weist eine Welle 48 auf, die in in der Zeichnung nicht dargestellten Lagern, die mit den Seitenwänden des Gehäuses 10 verbunden sein können, drehbar aufgenommen ist. Die Welle 48 bzw. die zugehörigen Lager können in einen Führungsschlitz 50 horizontal verschoben werden, um somit den Abstand der Förderwalze 46 mit Bezug auf den Elevatorförderer 38 zu verändern und somit einen zwischen dem Abgabeende des Elevatorförderers 38 und der Aufnahmeseite der Förderwalze 46 vorgesehene Durchlaßöffnung 52 zu variieren. Auf der Welle 48 der Förderwalze 46 sind zahlreiche, untereinander einen gleichmäßigen Abstand aufweisende Förderleisten 54 angeordnet, die einen Rotationskreis 56 bilden, der dicht über einer im Gehäuse 10 vorgesehenen Mulde 58 zur Aufnahme der Förderwalze 46 liegt. Die Förderwalze 46 sowie die Mulde 58 liegen unterhalb der Projektionsfläche eines Einzugsorganes 60 der Dresch- und Trenntrommel 22.

In Fig. 2 ist lediglich das vordere Ende der Dresch- und Trenntrommel 22 bzw. das zugehörige Einzugsorgan 60 dargestellt, auf dem eine oder mehrere Schneckenwendeln 62 angeordnet sein können, die das von der Förderwalze 46 abgegebene Erntegut erfassen und es nach hinten in ein Dresch- und Trenngehäuse 64 leiten. An die Schneckenwendeln 62 schließen sich zahlreiche sich in Axialrichtung erstreckende Dreschleisten 66 an. Das vordere Ende der Dresch- und Trenntrommel 22 weist einen Wellenzapfen 68 auf, der in einer Stirnseite 70 des Dresch- und Trenngehäuses 64 drehbar aufgenommen ist.

Der Antrieb der Dresch- und Trenntrommel 22 sowie des Elevatorförderers 38 erfolgt über in der Zeichnung nicht dargestellte Antriebsorgane. Die dem Elevatorförderer 38 nachgeschaltete Förderwalze 46 wird über einen gekreuzten Riementrieb 72 entgegengesetzt zur Drehrichtung der Förderkette 40 angetrieben, so daß das über dem Boden 44 unterschlächtig geförderte Erntegut durch die Durchlaßöffnung 52 gefördert wird und dann oberschlächtig über die Förderwalze 46 weitergeleitet wird, um es dann dem Einzugsorgan 60 der Dresch- und Trenntrommel 22 aufzugeben. Der Antrieb für die Förderwalze 46 kann so gewählt sein, daß die Umfangsgeschwindigkeit der Förderleisten 54 größer ist als die Umfangsgeschwindigkeit der Förderleisten 42 im Bereich der Durchlaßöffnung 52. Auf diese Weise ist es möglich, das Erntegut im Bereich der Durchlaßöffnung 52 etwas auseinanderzuziehen, um es dann beschleunigt dem Einzugsorgan 60 der Dresch- und Trenntrommel 22 aufzugeben. Auf diese Weise können im Einzugsbereich der Dresch- und Trenntrommel 22 Verstopfungen vermieden werden. Außerdem läßt sich bei einer derartigen Anordnung der Förderwalze 46 das Erntegut wesentlich besser zwischen die einzelnen Flanken der Schneckenwendel 62 plazieren, da die Förderwalze genau unterhalb der Projektionsfläche des Einzugsorganes 60 liegt.

Wie aus Fig. 2 hervorgeht, fördert der Elevatorförderer 38 das Erntegut unterschlächtig, d. h. entlang dem Boden 44. Es ist jedoch auch möglich bei einem andersgestalteten Schneidwerkstisch 28 das Erntegut oberschlächtig zwischen dem oberen Trum der Förderkette 40 und der oberen Wand 47 des Schrägfördergehäuses 30 zu leiten. In diesem Falle wird jedoch Elevatorförderer 38 in die gleiche Drehrichtung wie die Förderwalze 46 angetrieben.

Im Ausführungsbeispiel gemäß Fig. 1 und 2 ist lediglich eine Dresch- und Trenntrommel 22 sichtbar. Es können jedoch im Gehäuse 10 des Axialflußmähdreschers mindestens zwei parallel zueinander verlaufende Dresch- und Trenntrommeln vorgesehen werden, die über mindestens eine oder auch mehrere Förderwalzen mit Erntegut beschickt werden.

## Ansprüche

1. Vorrichtung zur Beschickung einer mindestens ein Einzugsorgan (60) aufweisenden Dresch- und Trenntrommel (22) eines Axialflußmähdreschers mit einem in einem Fördergehäuse (30) angeordneten und antreibbaren Förderorgan (38) und einem diesem nachgeschalteten, drehbaren Förderorgan (46), das unterhalb und im Bereich des vorderen Endes der Dresch- und Trenntrommel (22) vorgesehen ist und die Einzugsorgane (60) von unter her mit Erntegut beschickt, dadurch gekennzeichnet, daß das nachgeschaltete Förderorgan (46) das aus dem Fördergehäuse abgegebene Erntegut oberschlächtig dem Einzugsorgan (60) zuführt.

2. Vorrichtung nach Anspruch 1, dadurch gekennzeichnet, daß das nachgeschaltete Förderorgan, z. B. eine Förderwalze (46), in etwa unterhalb der Projektionsfläche des Einzugsorganes (60) liegt und gegenläufig zu dem im Fördergehäuse (30) angeordneten Förderorgan, z. B. einer Elevatorfördererwalze (38), antreibbar ist.

3. Vorrichtung nach den Ansprüchen 1 und 2, dadurch gekennzeichnet, daß das nachgeschaltete Förderorgan, z. B. die Förderwalze (46), mit dem Abgabeende des im Fördergehäuse (30) angeordneten Förderorganes, z. B. des Elevatorfördererwalze (38), eine Durchlaßöffnung (52) bildet, durch die das von dem im Fördergehäuse (30) angeordnete Förderorgan (38) unterschlächtig geförderte Erntegut geleitet wird.

4. Vorrichtung nach einem oder mehreren der vorherigen Ansprüche, dadurch gekennzeichnet, daß das nachgeschaltete Förderorgan, z. B. die Förderwalze (46), in einer dem Förderorgan angepaßten Mulde (58) unter dem Einzugsorgan (60) der Dresch- und Trenntrommel (22) angeordnet ist.

5. Vorrichtung nach einem oder mehreren der vorherigen Ansprüche, dadurch gekennzeichnet, daß die geometrische Verlängerung der durch die Stirnfläche des Einzugsorganes (60) verlaufenden vertikalen Ebene sich vor der äußeren Begrenzung der Aufnahmeseite des nachgeschalteten Förderorgans, z. B. der Förderwalze (46), vorbeierstreckt.

6. Vorrichtung nach einem oder mehreren der vorherigen Ansprüche, dadurch gekennzeichnet, daß das nachgeschaltete Förderorgan, z. B. die Förderwalze (46), mit einer größeren Geschwindigkeit angetrieben wird, als das im Fördergehäuse (30) angeordnete Förderorgan, z. B. der Elevatorförderer (38).

7. Vorrichtung nach einem oder mehreren der vorherigen Ansprüche, dadurch gekennzeichnet, daß die Drehrichtung des nachgeschalteten Förderorganes, z. B. der Förderwalze (46) der Förderrichtung des vom im Fördergehäuse (30) angeordneten Förderorgan, z. B. dem Elevatorförderer (38), abgegebenen Erntegutes entgegengesetzt ist.

8. Vorrichtung nach einem oder mehreren der vorherigen Ansprüche, dadurch gekennzeichnet, daß die Achsabstände zwischen den beiden Förderorganen, z. B. zwischen dem Elevatorförderer (38) und der Förderwalze (46), veränderbar sind.

9. Vorrichtung nach einem oder mehreren der vorherigen Ansprüche, dadurch gekennzeichnet, daß die geometrische Verlängerung der durch die Stirnfläche des Einzugsorganes (60) verlaufenden Ebene den nachgeschalteten Förderer, z. B. die Förderwalze (46), zwischen seiner stromabwärts liegenden äußeren Begrenzung und seiner Mittelachse (48) schneidet.

## Claims

1. Apparatus for charging a threshing and separating drum (22), which has at least one draw-in member (60), of an axial flow combine harvester, having a drivable conveyor member (38) disposed in a conveyor housing (30) and, downstream of the drivable conveyor member (38) a rotatable conveyor member (46) which is disposed beneath and in the region of the front end of the threshing and separating drum (22) and charges the draw-in member (60) with crop material from below, characterised in that the downstream-disposed conveyor member (46) feeds the crop material that is delivered from the conveyor housing, to the draw-in member (60) in overshoot relationship.

2. Apparatus according to claim 1 characterised in that the downstream-disposed conveyor member, for example a conveyor roller (46), is disposed approximately beneath the surface of projection of the draw-in member (60) and is drivable in opposition to the conveyor member, for example an elevator conveyor roller (38), which is disposed in the conveyor housing (30).

3. Apparatus according to claims 1 and 2 characterised in that the downstream-disposed conveyor member, for example the conveyor roller (46), with the delivery end of the conveyor member, for example the elevator conveyor (38), which is disposed in the conveyor housing (30), forms a through-flow opening (52) through which the crop material that is conveyed in undershoot relationship by the conveyor member (38) disposed in the conveyor housing (30) is conducted.

4. Apparatus according to one or more of the preceding claims characterised in that the downstream-disposed conveyor member, for example the conveyor roller (46), is arranged in a through (58) that is adapted to the conveyor member, under the draw-in member (60) of the threshing and separating drum (22).

5. Apparatus according to one or more of the preceding claims characterised in that the geometrical prolongation of the vertical plane that passes through the end face of the draw-in member (60) extends past and in front of the outer boundary of the receiving side of the downstream-disposed conveyor member, for example the conveyor roller (46).

6. Apparatus according to one or more of the preceding claims characterised in that the downstream-disposed conveyor member, for example the conveyor roller (46), is driven at a higher speed than the conveyor member, for example the elevator conveyor (38), which is disposed in the conveyor housing (30).

7. Apparatus according to one or more of the preceding claims characterised in that the direction of rotation of the downstream-disposed conveyor member, for example the conveyor roller (46), is opposite to the conveying direction of the crop material delivered by the conveyor member, for example the elevator conveyor (38), which is disposed in the conveyor housing (30).

8. Apparatus according to one or more of the preceding claims characterised in that the axis-to-axis spacings between the two conveyor members, for example between the elevator conveyor (38) and the conveyor roller (46), are variable.

9. Apparatus according to one or more of the preceding claims characterised in that the geometrical prolongation of the plane that passes through the end face of the draw-in member (60) intersects the downstream-disposed conveyor, for example the conveyor roller (46), between its downstream outer boundary and its axial centreline (48).

**Revendications**

1. Dispositif pour l'alimentation d'un rotor de battage et de séparation (22) d'une moissonneuse-batteuse de type axial comportant au moins un organe d'introduction (60) et comprenant un organe transporteur (38) pouvant être entraîné, monté dans un carter de convoyeur (30), et un organe transporteur rotatif (46) placé en aval du précédent et prévu au-dessous et dans la zone correspondant à l'extrémité avant du rotor de battage et de séparation (22), les organes d'introduction (60) étant alimentés en produits de récolte depuis le dessous, caractérisé en ce que l'organe transporteur (46) placé en aval amène les produits de récolte déchargés à partir du carter de convoyeur à l'organe d'introduction (60) en les faisant passer au-dessus de lui.

2. Dispositif suivant la revendication 1, caractérisé en ce que l'organe transporteur placé en aval, par exemple un cylindre transporteur (46), se trouve sensiblement au-dessous de la surface de projection de l'organe d'introduction (60) et peut être entraîné en sens opposé par rapport à l'organe transporteur, par exemple un convoyeur-élévateur (38), monté dans le carter de convoyeur (30).

3. Dispositif suivant les revendications 1 et 2, caractérisé en ce que l'organe transporteur placé en aval, par exemple le cylindre transporteur (46), ménage avec l'extrémité de déchargement de l'organe transporteur, par exemple du convoyeur-élévateur (38), monté dans le carter de convoyeur (30) un orifice de passage (52) par lequel les produits de récolte transportés en passant sous l'organe transporteur (38) monté dans le carter de convoyeur (30) sont acheminés.

4. Dispositif suivant l'une quelconque des revendications précédentes, caractérisé en ce que l'organe transporteur placé en aval, par exemple le cylindre transporteur (46), est disposé au-dessous de l'organe d'introduction (60) du rotor de battage et de séparation (22), dans une cuvette ou dépression (58) adaptée à l'organe transporteur.

5. Dispositif suivant l'une quelconque des revendications précédentes, caractérisé en ce que le prolongement géométrique du plan vertical passant par la face terminale de l'organe d'introduction (60) s'étend en avant de la limite extérieure du côté réception de l'organe transporteur placé en aval, par exemple du cylindre transporteur (46).

6. Dispositif suivant l'une quelconque des revendications précédentes, caractérisé en ce que l'organe transporteur placé en aval, par exemple le cylindre transporteur (46) est entraîné à une vitesse supérieure à celle de l'organe transporteur, par exemple du convoyeur-élévateur (38), monté dans le carter de convoyeur (30).

7. Dispositif suivant l'une quelconque des revendications précédentes, caractérisé en ce que le sens de rotation de l'organe transporteur placé en aval, par exemple du cylindre transporteur (46), est opposé au sens de transport des produits de récolte déchargés par l'organe transporteur, par exemple le convoyeur-élévateur (38), monté dans le carter de convoyeur (30).

8. Dispositif suivant l'une quelconque des revendications précédentes, caractérisé en ce que l'entraxe entre les deux organes transporteurs, par exemple le convoyeur-élévateur (38) et le cylindre transporteur (46), est variable.

9. Dispositif suivant l'une quelconque des revendications précédentes, caractérisé en ce que le prolongement géométrique du plan passant par la face terminale de l'organe d'introduction (60) coupe le transporteur placé en aval, par exemple le cylindre transporteur (46), entre sa limite extérieure orientée vers l'aval et son axe médian (48).

FIG. 1

FIG. 2